# EUROPEAN PATENT APPLICATION

(11) **EP 4 520 730 A1**
(43) Date of publication of application: **12.03.2025**
(21) Application number: 23195840.6
(22) Date of filing: 06.09.2023
(51) Int. Cl.: C02F 1/28, C02F 1/00, E04D 13/04, E04G 23/00, C02F 1/38, C02F 1/52

(54) **DEVICES, SYSTEMS AND PARTS THEREOF, AS WELL AS PROCESSES FOR PURIFYING WATER**

(71) Applicant: Gerätebau Schwarzer AG, 3076 Worb (CH)
(72) Inventor: Schwarzer, Hans, 3076 Worb (CH); Nakanishi, Hitomi, 3202 Frauenkappelen (CH)
(74) Representative: Braunpat AG

(57) **Abstract**

The present invention is directed to a device (1000) for purifying water flowing down the surface of a building, whereby the device (1000) comprises a receptive module (100), a purification module and at least one fastening element,
- whereby the receptive module (100) comprises a back wall (11), a front wall (12) and a bottom (15) to provide an internal space (120),
- whereby the receptive module (100) is mountable at the external surface of a building by means of the at least one fastening element such that the water flowing down the external surface of the building is directed towards the internal space (120),
- whereby the receptive module (100) is configured to receive the purification module, and
- whereby the purification module is configured to purify the water.

The present invention is further directed to the receptive module (100) itself as well as to a system comprising several of these devices or several of these receptive modules. Further embodiments of the present invention are processes for purifying the water flowing down the surface of a building.

The invention thus allows the purification of the water flowing down the surface of a building and therefore prevents that environmentally harmful particles or substances can get into the soil, the ground water, the sewage system and in water bodies close to settlements.

## Description

### Technical Field

The present invention is directed to a device for purifying water that is flowing down the external surface of a building, so called "façade water", comprising a receptive module, a purification module and at least one fastening element,
- whereby the receptive module comprises a back wall, a front wall and a bottom to provide an internal space,
- whereby the receptive module is mountable at the external surface of a building by means of the at least one fastening element such that the water flowing down the external surface of the building is directed towards the internal space,
- whereby the receptive module is configured to receive the purification module, and
- whereby the purification module is configured to purify the water.

The present invention is further directed to the receptive module itself as well as to a system comprising several of these devices and several of these receptive modules, respectively. The present invention also encompasses processes for purifying façade water.

The device, the receptive module as well as the systems according to the present invention may preferably be fixed on the external surface of a building beneath the windows and/or in the lower part of the building, i.e., in the base of the building, preferably along the complete length of the building.

The devices, the systems and the processes of the present invention allow the filtration of façade water and thus prevent that environmentally harmful particles or substances can be washed out from the façade and get into the soil, the ground water, the sewage system and in water bodies close to settlements.

### Background of the invention

To avoid undesirable green coatings on house walls due to algae and/or fungi growth, many homeowners turn to paints with biocides and/or fungicides. Their main task is to kill algae and fungi growing on the external wall or the façade which is mainly caused by the formation of condensation water. These paints are very durable, so that the façades or external walls, i.e., the external surfaces remain protected for several years.

But these toxins contained in the paints may pollute the environment when washed out by rain or condensation water constantly damping the external surface of a building or in the case the external surface of a building is cleaned with water and/or detergents.

In addition, the façade paint and the paint for the external walls of a building, respectively, weathers over time due to seasonal temperature fluctuations and sunlight. In addition, harmful particles adsorbed from the air condensate on the external surface of a building. The biocides and fungicides, as well as any of the harmful particle adsorbed thereon are sooner or later washed out and end up in the soil, the ground water, the sewage system and/or in water bodies close to settlements.

All of these biocides, fungicides and harmful particles can be extremely harmful to humans which take them up via the drinking water, as well as to aquatic organisms and fish. In addition, biocides may have an indirect effect on insect mortality, as their use reduces the food supply for insects.

Thus, there is a need to prevent that biocides and fungicides, or any other harmful particles being washed out from façades, or external surfaces of buildings in general, or their paints end up in the soil, the ground water, the sewage system and in water bodies close to settlements.

This need is satisfied by the devices, the systems and the processes according to the present invention.

### Description of the invention

The present invention is directed to a device for purifying water flowing down the external surface of a building, whereby the device comprises a receptive module, a purification module and at least one fastening element,
- whereby the receptive module comprises a back wall, a front wall and a bottom to provide an internal space,
- whereby the receptive module is mountable at the external surface of a building by means of the at least one fastening element such that the water flowing down the external surface of the building is directed towards the internal space,
- whereby the receptive module is configured to receive the purification module, and
- whereby the purification module is configured to purify the water.

The term "external surface of a building" encompasses the surface of any type of wall or façade of a building. The walls or façades of buildings may be made of any material such as e.g., wood, concrete, stone, foam material, plastic material, rock wool or glass wool. The term "water flowing down the external surface" encompasses rain or snow or any other form of water flowing down the external surface as well as water condensed on the external surface which then flows down said surface.

In a preferred embodiment of the invention, the back wall, the front wall and the bottom of the receptive module are formed in one piece, more preferably in the shape of a U-profile. Preferably the bottom is at least partially water-permeable. In a further preferred embodiment, the bottom therefor comprises a plurality of openings. The openings can be of any form or size such as e.g., holes, slits, etc. Alternatively, the bottom could be shaped as a grid or be perforated.

In another preferred embodiment the device according to the present invention comprises a releasable cover to cover the receptive module, whereby said cover is preferably at least partially water-permeable. In a further preferred embodiment, the cover has a plurality of openings, preferably it has a plurality of slits or could be configured as a grid.

Advantageously the cover can be inserted in the interior of the receptive module, i.e., the internal space, which facilitates the water to be purified to be directed thereto. The cover could e.g., be clamped into the receptive module.

In an alternative embodiment of present invention, it may be possible that the cover is fixedly mounted on the receptive module whereby the bottom is configured to be releasably attached to the receptive module so to provide an opening through which the purifying module can be inserted into the interior of the receptive module and of the device.

In a further preferred embodiment, the bottom and the cover comprise each a plurality of openings, whereby preferably the cover has a plurality of slits and the bottom is perforated.

In a preferred embodiment, the device according to the present invention further comprises at least one side cover detachably attached to the receptive module. More preferably the device comprises two side covers detachably attached to the receptive module which may function as kind of end caps and form closed side walls of the receptive module.

Thus, in one preferred embodiment of the device of the present invention the back wall, the bottom and the front wall is formed as one piece in a U-shape and can be covered at the top by the cover such to provide a hollow body with open lateral sides. This device can be seen as a first arrangement having an elongated hollow body with a rectangular form. The first lateral side can be closed with the first side cover and the second lateral side with a second side cover, both configured as detachable side covers. Therefore, the device can be provided as a hollow body closed on three sides and closable by removable covers at the top and/or at one lateral side or both lateral sides. By removing the cover from the top, the interior of the receptive module and thus, the device is accessible to insert or to remove the purification module after use. To complete the device for the use, the top and the lateral sides are closed by arranging the removable corresponding covers.

In an alternative embodiment of the device of the present invention the back wall, the cover and the front wall are non-detachably fixed to each other to result in a second fixed arrangement. This second arrangement has a reversed U-shape, and the bottom side can be closed by the bottom, releasable attached to the form. The device according to the second arrangement, which is closed at the top and the bottom, can be used as the first arrangement with one or both lateral sides closed by corresponding detachably side covers.

In a further alternative embodiment of the device of the present invention the back wall, the cover and the bottom are non-detachably fixed to each other to result in a third fixed arrangement. If the front wall is put on this third fixed arrangement, the form of it is an elongated hollow body with two open lateral sides. The first lateral side can be closed with a first side cover and the second lateral side with a second side cover. The first and second side cover can be designed as detachable side covers. Furthermore, they both can be designed as being openable and closable or only one of them can be designed in such a way. The front wall is removable from this third fixed arrangement so that the purification module may be put into the third fixed arrangement and removed again after use through the opening that is formed when the front wall is removed. The front wall can be designed as being openable and closable.

In a further alternative embodiment of the device of the present invention the back wall, the front wall, the cover and the bottom are non-detachably fixed to each other to result in a fourth fixed arrangement. This fourth fixed arrangement forms a hollow body, wherein the interior is limited by the back wall, the bottom, the front wall, and the cover. The purification module can be inserted from one of the open lateral sides. After inserting the purification module, the side covers can be put on place to close the lateral sides of the device.

Each wall of the receptive module, in particular the back wall and the front wall, has a certain dimension defined by a height in vertical direction and by a length extending parallel to the external surface of the building and a certain width in horizontal direction, i.e., the distance of the back wall and the front wall to each other.

The receptive module as well as the side covers and the cover can be made from aluminum or from any plastic; preferably they are made from aluminum which is more weather resistant.

In a preferred embodiment of the device of the present invention, the back wall and the front wall of the receptive module have a different height, wherein the back wall is higher than the front wall. To arrange the device at the external surface of a building, the greater height of the back wall being in contact therewith can be used for inserting fastening elements there to fix the device at said surface of a building.

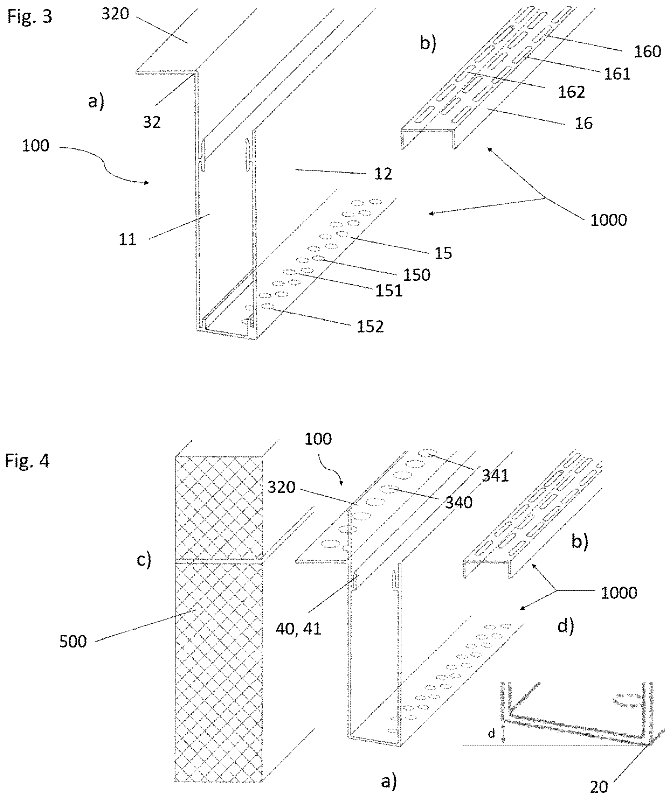

In a further preferred embodiment of the device of the present invention, the receptive module comprises at least one drip point. This may be achieved by lowering the front wall in relation to the back wall, e.g., by a certain height difference d as shown in Fig. 4 d, so that the bottom of the receptive module is inclined. By this inclination a drip point is formed.

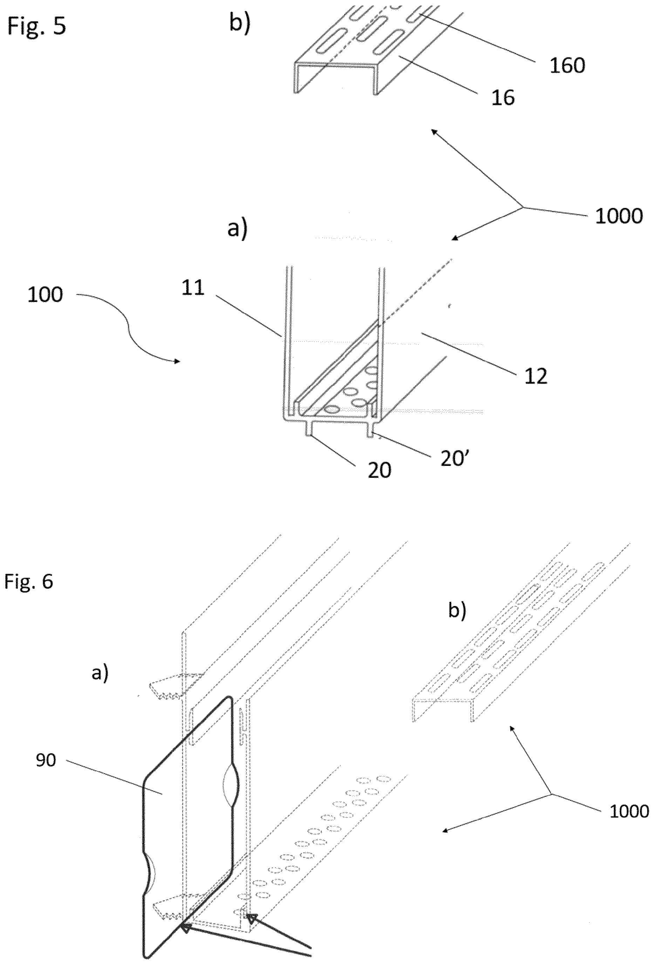

In an alternative embodiment of the device of the present invention, the bottom of the receptive module is not inclined, but provided with two drip points as show in Fig. 5a.

In an embodiment of the device of the present invention, the purification module for purifying the water flowing down the external surface of the building comprises activated carbon and/or any other substance which is able to adsorb environmentally harmful particles contained in said water. The activated carbon and/or any other substance which is able to adsorb environmentally harmful particles contained in said water can be provided in a cartridge. It can furthermore be provided in any form or size that is suitable such as e.g., as powder, chips, grains or sand-like. Foams equipped with activated carbon, and/or any other absorbing substance may also be used.

The term "environmentally harmful particles" encompasses any biocide or toxin contained in any paint put on the external surface of a building as well as any environmentally harmful substance which is adsorbed or absorbed on the external surface of a building. The term "toxin" encompasses any substance being toxic for a living organism, i.e., any biocide such as e.g. algicides and fungicides.

Several devices according to the present invention may be connected with each other to form a system according to the present invention. This connection is enabled by configuring the receptive module in such a way so that it is connectable to another receptive module.

Preferably this is achieved by means of a connecting element. Thus, in a preferred embodiment of the device according to the present invention there are means provided in the back wall, in the bottom and/or in the front wall of the receptive module to receive a connecting element which allows the connecting of one device according to the present invention to a second device according to the present invention. These means may alternatively be used to receive the side covers.

Thus, in a preferred embodiment of the device of the present invention the back wall comprises a means to receive a connecting element to allow the connecting of one device to another device or to receive the first side cover or to receive the second side cover. Preferably the back wall comprises two means to receive a connecting element to allow the connecting of one device to another device or to receive the first side cover or to receive the second side cover, more preferably these two means are located distant to each other, e.g., one in the upper part of the back wall and the other in the lower part of the back wall.

In a further preferred embodiment of the device of the present invention the back wall as well as the front wall comprise each a means to receive a connecting element to allow the connecting of one device to another device or to receive the first side cover or to receive the second side cover. When two devices are connected, the one connecting element connects the back wall of the one device with the back wall of the other device, and the other connecting element connects the front wall of the one device with the front wall of the other device. Preferably each of the back and the front walls comprises two such receiving means, which are more preferably located distant to each other, e.g., one in the upper part of each wall and the other in the lower part of each wall.

Instead of having such means in the lower part of one wall, the bottom could also comprise such means to receive a connecting element to allow the connecting of one device to another device or to receive the first side cover or to receive the second side cover.

In addition, the back wall can also comprise a means to receive the cover. Preferably the back wall and the front wall both comprise each a means to receive the cover.

In a preferred embodiment of the device according to the present invention the receiving means are guiding rails which extend at least partially along the length of the back wall and/or the front wall and/or the bottom. Preferably these guiding rails extend along the complete length of the back wall and/or the front wall and/or the bottom.

To connect two receptive modules and to devices according to the invention, respectively, the connecting element is first completely put into one receptive module and, when the other receptive module is put aside the first receptive module, it is pushed back outside the first receptive module into the second receptive module. By this a plurality of receptive modules may be connected with each other, so that they form a common longitudinal hollow body.

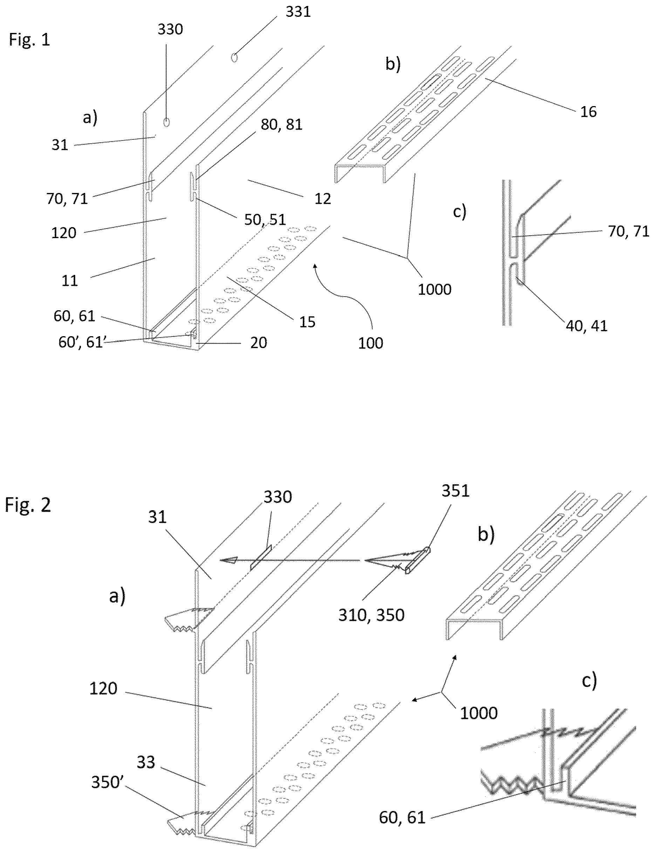

As shown in Fig. 1a, 2a, 2c, 3a, 6a and 7a the receiving means in the bottom of the device according to the present invention are preferably U-shaped. Due to the inclination of the bottom it is advantageous if the guiding rails 60, 61' at the bottom at the front wall are higher than the guiding rails 60, 61 at the bottom at the back wall.

As shown in Fig. 4a the means in the back and the front wall for receiving the cover of the device according to the present invention are U-shaped.

As shown in Fig. 1a, 1c, 2a, 3a, 6a and 7a the means of the back wall and of the front wall to receive the connecting element and the cover are preferably combined in a double U-shaped guiding trail.

In an embodiment of the device of the present invention the water-permeability of the receptive module is achieved by using perforated parts. The number of openings is chosen such that an effective filtration is guaranteed also in case of heavy rain falls.

In a preferred embodiment of the device of the present invention the bottom and the cover are water-permeable. Therefore a perforated bottom and a perforated cover can e.g. be used. The form and size of the openings is such that a fast flow of the water through the device is guaranteed.

There are several options to mount the device according to the present invention to an external surface, i.e., to an exterior wall or a façade, of a building. Therefore, there are different possible fastening elements.

One possibility is to design the fastening element as a plate and locate it at the top end of the back wall as shown in Fig. 3a, whereby it extends preferably in horizontal plane at least partially along the length of the back wall. As shown in Fig. 4a such plate may have at least one opening, preferably several openings, more preferably a plurality of openings which are preferably evenly distributed along its length. Preferably the plate extends along the complete length of the back wall. The plate is then put into appropriately shaped slots in the external surface, i.e., in the external wall or in the façade, of a building. This is especially advantageous for façades made of foam material, plastic material, rock wool or glass wool.

Another possibility is to provide as fastening element a plurality of fastening means such as e.g. nails to mount the device to the external surface of a building.

A further possibility is to provide at least one opening (see Fig. 1a and Fig. 2a), preferably several openings, more preferably a plurality of openings, more preferably e.g. in the upper part of the back wall, so that a fastening means can be inserted into each of said opening. Any fastening means known to the person skilled in the art to connect devices to the external surface of a building are suitable. Non-limiting examples are nails and screws. Depending on the fastening means used the openings are formed accordingly, may it be in the form of holes or slots.

The fastening element/means could also be configured as a jagged tab (see Fig. 2a) which can be fastened at the external surface of the building by means of an adhesive. Advantageously these jagged tabs are inserted into slit-shaped openings of the back wall of the receptive module provided with an adhesive, whereby these openings are preferably located in the upper part of the back wall. The jagged tabs are preferably made from aluminum or chrome steel. The side opposite the arrow is preferably thickened. Since they cut through façade material easily, the provision of further openings in the façade for their insertion is not necessary. As shown in Fig. 2a it may also be advantageous to have additional jagged tags in the lower part of the back wall. The jagged tabs are located on the outer side of the back wall that is adjacent to the external surface of the building.

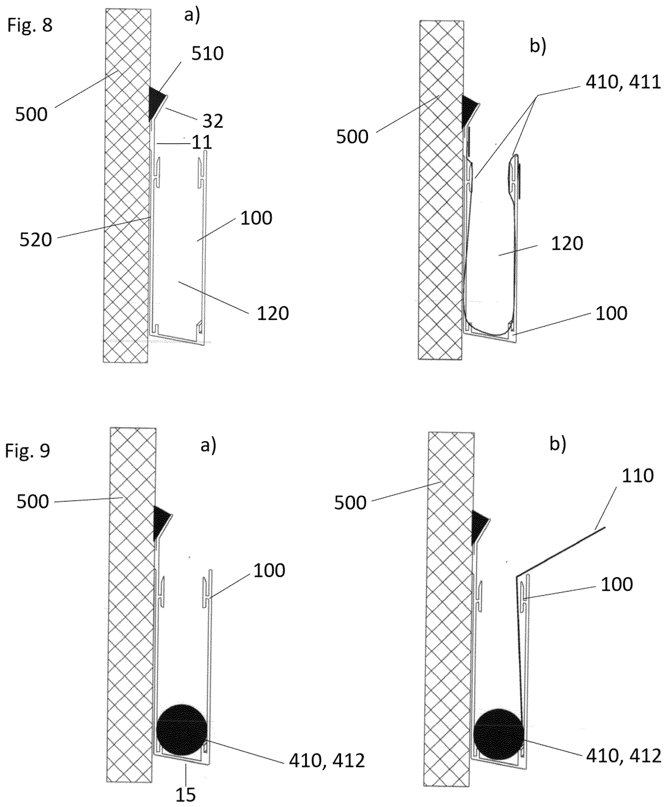

A further possibility of mounting the receptive module and the device, respectively, to the external surface of a building is shown in Fig. 8a: The upper part of the back wall of the receptive module is inclined towards the interior side of the back wall so that a space between the back wall and the external surface of the building is created where an adhesive or any other joint material may be put in. Additionally a sealing strip can be mounted between the façade or the exterior wall of the building and the back wall. Creating and filling the space with an adhesive or any other joint material has also the advantage that the flow of the water is directed to the internal space, i.e., the interior of the receptive module.

In a further embodiment of the device according to the present invention the purification module encompasses a water collecting means, a filtration device and optionally a suction device. Such device is especially advantageous for cases in which the external surface of a building is washed with cleaning agents. In these cases much more water to be purified results than when constantly water to be purified is produced by raining against the external surface of a building. Therefore, the volume of the receptive module has to be increased, as well as the flow through the receptive module prevented.

This can e.g. be achieved by inserting a plastic foil into the interior, i.e., the internal space, of the receptive module as shown in Fig. 8b so that the water cannot flow through the openings of the bottom of the receptive module any more. The volume of the receptive module can additionally be increased by inserting an expansion as shown in Fig. 9b. The expansion may be of metal or plastic.

The plastic foil inserted in the internal space acts here as water collecting means. The purification of the water is then carried out outside the receptive module. The plastic foil may afterwards be sealed and the water collected therein then transported to the filtration device where its purification takes place or the water collected in the plastic foil may be pumped off to the filtration device. This can also be done continuously, i.e. the water flowing in the internal space is continuously pumped off.

Instead of a plastic foil a foam round profile which also acts as a water collecting means can be put into the receptive module as shown in Fig. 9a. The foam prevents the water from exiting the receptive module, e.g., through the bottom. The water being collected above the foam and in the foam is then further transported to a filtration device and purified there. The transport may be achieved by sucking the water with a suction device and pumping it into a filtration device.

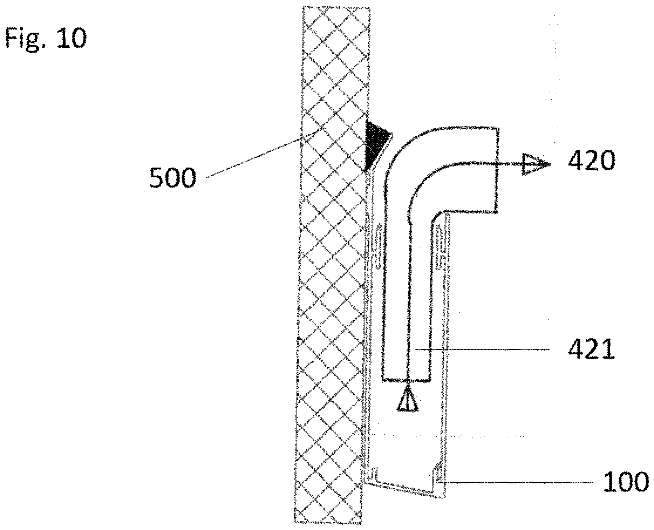

When a sucker is used, it is preferably positioned as shown in Fig. 10.

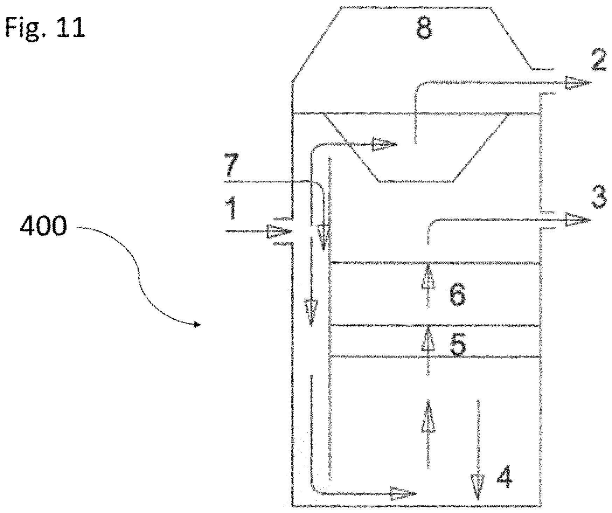

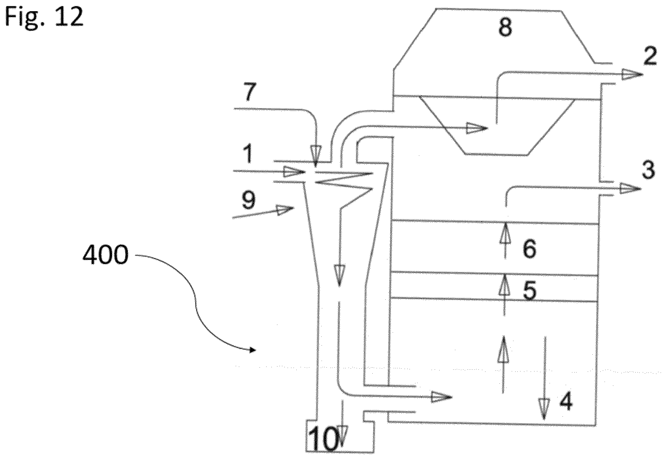

Preferred embodiments of the filtration devices are shown in Fig. 11 and 12. Here the mixture 1 of the collected water and air is treated with a flocculating agent such as e.g. iron or aluminum salts such as e.g. iron or aluminum oxides or their mixed oxides. The flocculating agent can be put before, with or after the mixture of the water and the air in the filtration device. The solids being formed by reaction of the flocculating agent with the toxins contained in the water as well as the solids already contained in the water per se are collected at the bottom of the filtration device, whereby the remaining liquid is pumped by means of a suction unit through a filter and a layer comprising active carbon and/or any other absorbing material. The purified water can be taken off the filtration device as well as the air.

The suction unit enables a flow through the filter and the layer comprising active carbon and/or any other absorbing material of the filtration device from bottom to top by creating a vacuum. Care has to be taken that the speed of settlement of the solid impurities of the water is higher than the flow rate.

Fig. 12 shows a variation of the filtration device to purify the water according to Fig. 11 whereby the filtration device comprises additionally a cyclone separator so that solids already contained in the water such as sand and other heavy particles are already separated off when the mixture 1 of water and air enters the filtration device.

It is to be understood that the present invention also encompasses any combination of any feature of any embodiment of the device according to the present invention with each other though not explicitly mentioned.

The present invention is further directed to the receptive module itself. Thus, the present invention is directed to a receptive module, configured to receive a purification module to purify water flowing down the external surface of a building and configured to be mounted to the external surface of the building, whereby the receptive module comprises a back wall, a front wall and a bottom to provide an internal space for the water.

In a preferred embodiment the receptive module further comprises
- a plurality of openings in the bottom, and/or
- at least one drip point at the bottom, and/or
- means at the back wall and/or means at the front wall and/or means at the bottom, whereby these means are configured to receive a connecting element and/or to receive a side cover and/or to receive a cover.

The receptive module may be configured in such a way so that one receptive module may be connected with another receptive module. One preferred way of doing so is to provide means at the back wall and/or at the front wall and/or at the bottom configured to receive a connecting element, e.g. in form of U-shaped guiding rails.

Furthermore, the receptive module may be configured to receive a cover. This may be achieved e.g. by means at the back wall and/or at the front wall configured to receive the cover, such as preferably guiding rails.

It is to be understood that the present invention also encompasses any combination of any feature of any embodiment of the receptive module with each other though not explicitly mentioned including those features mentioned when describing the device according to the present invention above.

The present invention is further directed to a system comprising at least two devices or two receptive modules according to the present invention, preferably connected by connecting elements. It is possible to connect a plurality of devices or receptive modules to each other, preferably via the connecting elements.

In an embodiment of the system according to the present invention n devices or n receptive modules are connected to each other by n-1 connecting elements, whereby n is an integer from 2 to 100, preferably from 2 to 50.

In a preferred embodiment of the systems according to the present invention two connecting elements are used to connect two devices or two receptive modules to each other - one to connect the back walls and the other to connect the front walls. That means to connect n devices or n receptive modules 2n-2 connecting elements are used.

The device, the receptive module as well as the systems according to the present invention may preferably be fixed on the external surface of a building beneath the windows and/or in the lower part of a building, i.e., in the base of the building, preferably along the complete length of the building.

In an exemplary, not limiting version of such device being mounted at the base of the building the front wall of the receptive module has a height of e.g., 10 cm, the back wall has a height of e.g., 13 cm, whereby their distance to each other is e.g. 3 cm and whereby their lengths is e.g. up to 2.5 m. The devices mounted beneath the windows may be smaller. These numbers are given for illustrative purposes only and should in no way be construed of limiting the present invention to such dimensions.

Further objects of the present invention are processes for purifying water flowing down the surface of a building. Depending on the kind of purification module, the processes slightly differ.

For permanent use, the purification module for purifying the water flowing down the external surface of the building preferably comprises activated carbon and/or any other substance which is able to adsorb environmentally harmful particles contained in said water. The process carried out in a device comprising such purification module comprises then the following steps:
a) directing the water in the internal space of the receptive module or the receptive modules,
b) flowing of the water to be purified through the purification module or the purification modules to obtain purified water,
c) leaving of the purified water obtained in step b) of the receptive module or the receptive modules.

If the external surface of a building is cleaned, preferably with a detergent, a higher amout of water flowing down it is purified. Therefore, preferably a purification module is used, which encompasses a water collecting means, a filtration device and optionally a suction device. The process then comprises the following steps:
i) inserting the water collecting means into the internal space of the receptive module or the receptive modules to prevent the water of leaving the receptive module or the receptive modules,
ii) directing the water to be purified in the internal space of the receptive module or the receptive modules to collect it there,
iii) transferring the water collected in step ii) into the filtration device, whereby the filtration device comprises a suction unit, a filter and a layer of an absorbing material, whereby the transfer of the water into the filtration device is preferably carried out with a suction device,
iv) sucking the water to be purified with the suction unit through the filter and the layer of an absorbing material of the filtration device, whereby purified water is obtained.

This process can also be done continuously, i.e. the water flowing in the internal space is continuously transferred to the filtration device, e.g., by pumping it off there.

After step iii) the following additional step iii1) and/or step iii2) may be carried out:
iii 1) passing the water to be purified through a cyclone separator,
iii2) reacting the water to be purified with a flocculating agent.

As absorbing material e.g., active carbon may be used, as flocculating agent e.g. iron and/or aluminum salts such as their oxides or mixed oxides may be used. The flocculating agent can be put before, with or after the water to be purified in the filtration device. The solids being formed by reaction of the flocculating agent with the toxins contained in the water to be purified as well as the solids already contained in the water to be purified per se are collected at the bottom of the filtration device.

The present invention is now further illustrated by the following non-limiting examples that show preferred embodiments of the present invention.

### Short Description of the drawings

Fig. 1-4 show different embodiments of the device according to the present invention. Fig. 1a, 2a, 3a and 4a show hereby different embodiments of the receptive module of the present invention. Fig. 1b, 2b, 3b and 4b show the cover.
Fig. 5a shows an alternative design of the receptive module of the device according to the present invention whereby the bottom is not inclined but provided with two drip points 20, 20'. Fig. 5b shows the cover 16 with a plurality of openings (160).
Fig. 6 shows the connecting element and its position within the device. Fig. 6c shows the system comprising at least two devices or receptive modules.
Fig. 7 shows the side cover and its position within the device.
Fig. 8a shows one way of mounting the receptive module and the device, respectively, to the façade or to the exterior wall of a building.
Fig. 8b-10 show the use of the device according to the present invention in case the external surface of a building is washed.
Fig. 8b shows one way of preparing the receptive module and the device, respectively, for collecting the wash water therein, whereby its purification is carried out outside the receptive module.
Fig. 9a and 9b show two other ways of preparing the receptive module and the device, respectively, for collecting the wash water therein, whereby its purification is carried out outside the receptive module, whereby a foam round profile is used as water collecting means.
Fig. 10 shows the positioning of the sucker to pump off the water to be purified outside the receptive module.
Fig. 11 and 12 show each a filtration device to purify the water.

### Preferred embodiments of the present invention

Fig. 1a shows an embodiment of the receptive module 100 according to the present invention, whereby the back wall 11, the front wall 12 and the bottom 15 form a first fixed arrangement on which the cover 16 (shown in Fig. 1b) can be put on. The back wall 11, the front wall 12 and the bottom 15 are connected not-detachably with each other to provide the internal space 120. This arrangement resembles the lower part of an elongated hollow body. The side wall 12 is slightly lowered compared to side wall 11, so that the bottom is inclined and a water nose, a so-called drip point, is formed at 20 (see also Fig. 4d).

As can be seen the back wall 11 is higher than the front wall 12. The upper part 31 of the back wall comprises openings 330, 331 into which fastening means can be inserted to fix the device to the external surface of a building. The number and shape of the openings is variable, as well as the type of the fastening means. Possible, non-limiting examples of fastening means are nails and screws.

The embodiment of the device according to Fig. 1a) comprises means for receiving a connecting element at the back wall (means 40), at the front wall (means 50) and at the bottom (means 60, 60'). These means are formed as guiding rails 41, 51, 61 and 61'. The bottom 15 is perforated and has many openings to allow a fast flow of water to be purified through the device 100. The water enters the device via the perforated cover 16.

There are means 70 for receiving the cover 16 at the inner side of the back wall and means 80 for receiving the cover 16 at the inner side of the front wall, so that the cover 16 is received between the sides of the back and the front wall that show to the interior of the device 100. These receiving means 70 and 80 are formed as guiding rails 71 and 81. It can be seen from Fig. 1a) that the guiding rails 61 and 61' on the bottom are U-shaped, and the guiding rails 41 and 71 at the back wall (see the enlarged image of it in Fig. 1c)) and the guiding rails 51 and 81 at the front wall are formed in a double U-shape.

In the device according to Fig. 1 the purification module 200 (not shown) may be put into the device 100 via the opening that is formed when the cover 16 is removed (see Fig. 1a).

Fig. 2 shows a modified embodiment of the device shown in Fig. 1. Here the openings 330 in the upper part 31 of the back wall are slits provided with an adhesive, into which jagged tabs 350 can be inserted as fastening means 310. At the lower part 33 of the back wall further jagged tabs are fixed. The fixing of this device 100 to the external surface of a building is done via the jagged tabs 350 and 350', which are put into the grouts or joints of an external wall or a façade of a building, whereby several of them are distributed along the upper part 31 and the lower part 33 of the back wall in longitudinal direction. The jagged tabs 350 are preferably made from aluminum or chrome steel. Preferably their end 351 opposite the arrow is thickened.

Fig. 3 shows a modified embodiment of the device shown in Fig. 1. Here a plate 320 is mounted on the top end 32 of the back wall 11. In a preferred embodiment of this device, the plate 320, the back wall 11, the bottom 15 and the front wall 12 as well as the guiding rails 41, 71, 51, 81, 61, 61' are molded in one piece. This plate 320 is then put into accordingly formed slots in the external wall or in the façade 500 of a building as shown in Fig. 4 c) to fix the device 100.

Fig. 4 shows a modified embodiment of the device 100 according to the present invention, whereby the plate 320 for fixing the device 100 has openings 340, 341 etc. Here the first and the second side cover (13, 14) could be clamped into the receptive module 100. Fig. 4 d) shows the height difference d) by which the front wall 12 is lowered in relation to the back wall 11.

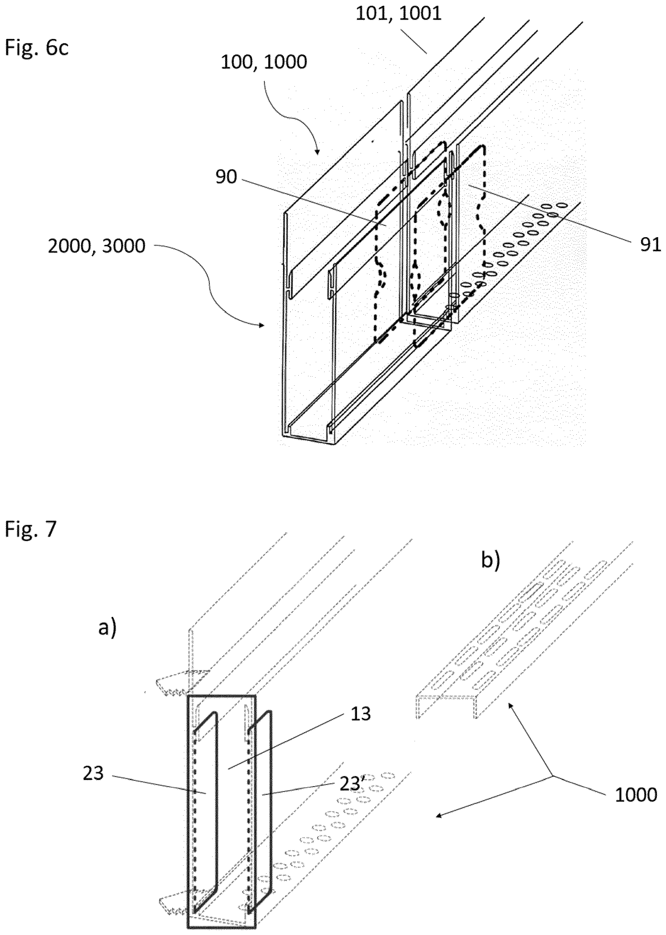

Fig. 6a shows the device according to Fig. 2, whereby the position of the connecting element 90 is shown, when two devices 100, 101 are connected with each other. The connecting element 90 is inserted in the guiding rail 61 of the bottom and in the guiding rail 41 the back wall as shown by the left arrow in Fig. 6a). A further connecting element 91 will also be inserted in the guiding rails 61' of the bottom and in the guiding rails 51 of the front wall. This is indicated by the right arrow in Fig. 6a). Fig. 6b shows the corresponding cover 16. Fig. 6c shows the system 2000 and 3000, respectively, whereby two devices 1000, 1001 or two receptive modules 100, 101 are connected with each other by two connecting elements 90, 91.

Such connecting elements 90, 91 can as well be inserted in the corresponding guiding rails of the devices according to Fig. 1-3.

Fig. 7 shows the device according to Fig. 2, whereby the positioning of the first side wall 13 is shown. This first side cover 13 is formed as a cover with two parts 23, 23' that are designed to fit into the guiding rail 41 of the back wall, the guiding rail 51 of the front wall and the guiding rails 61, 61' of the bottom. Thus, the first side cover is detachably fixed to the first fixed arrangement formed by the back wall 11, the bottom 15 and the front wall 12. The purification module 200 may be inserted and removed via the opening that is formed, when such first side cover 13 is removed.

In the way of mounting the receptive module 100 and the device, respectively, to the façade or to the external wall 500 of a building shown in Fig. 8a the upper part 32 of the back wall 11 is inclined towards the interior side of the back wall 11 so that a space 510 between the back wall and the façade or the exterior wall 500 of the building is created where an adhesive may be put in. Additionally, a sealing strip 520 can be mounted between the façade or the exterior wall 500 of the building and the back wall 11. Creating and filling the space 510 has also the advantage that the flow of the façade water is directed to the interior of the receptive module 100, i.e., the internal space 120.

In the embodiment shown in Fig. 8b a plastic foil 411 is inserted in the interior of the receptive module 100 to collect the water to be purified therein. The plastic foil 411 acts here as water collecting means 410. The purification of the water is then carried out outside the receptive module 100. The plastic foil 411 may afterwards be sealed and the water collected therein then transported to the filtration device 400 where its purification takes place, or the water collected in the plastic foil 411 may be pumped off to the filtration device 400. The collecting and pumping off of the water may be done continuously.

In the embodiment according to Fig. 9a a foam round profile 412 which acts as a water collecting means 410 is put into the receptive module. The foam prevents the water exiting through the bottom 15 of the receptive module 100. The water being collected above the foam 412 and in the foam 412 is then further transported to a filtration device 400 and purified there. The transport may be achieved by sucking the water with a suction device 420 and pump it into the filtration device 400.

Fig. 9b shows a variation of the embodiment shown in Fig. 9a whereby the volume of the receptive module 100 is enlarged by an expansion 110. The expansion 110 may be of metal or plastic.

Fig. 10 shows the positioning of the sucker 421 to pump off the water to be purified outside the receptive module 100 in the filtration device 400. The water collecting means 410 - though existent in this embodiment - are not shown here.

In the filtration device 400 according to Fig. 11 the mixture 1 of the collected water and air is put into the filtration device 400 together with a flocculating agent 7 such as e.g., iron or aluminum salts such as e.g., iron or aluminum oxides or their mixed oxides. The flocculating agent 7 can also be put before or after the mixture 1 of water and air in the filtration device 400. The solids 4 being formed by reaction of the flocculating agent with the toxins contained in the water as well as the solids 4 already contained in the water per se are collected at the bottom of the device, whereby the remaining liquid is pumped by means of the suction unit 8 through a filter 5 and a layer 6 of active carbon. The purified water 3 can be taken off the filtration device as well as the air 2.

Fig. 12 shows a variation of the filtration device to purify the façade water according to Fig. 11 whereby the filtration device comprises additionally a cyclone separator 9 so that solids 10 already contained in the water such as sand and other heavy particles are already separated off when the mixture 1 of water and air enters the filtration device 400. The purification is then carried out as explained with respect to Fig.11 above.

### List of reference signs

- 1: Water-Air-Mixture
- 2: Air
- 3: Water
- 4: Flocculated Solids
- 5: Filter
- 6: Layer of an absorbing material such as e.g., activated carbon
- 7: Flocculating agent
- 8: Suction Unit
- 9: Cyclone separator
- 10: Solids

- 1000, 1001: device

- 100, 101: receptive module
- 110: expansion
- 120: internal space

- 11: back wall
- 12: front wall
- 13: first side cover
- 14: second side cover
- 15: bottom
- 16: cover
- 20, 20': drip point
- 23, 23': parts of the first side cover
- 31: upper part of the back wall
- 32: top end of the back wall
- 33: lower part of the back wall
- 40: means of the back wall to receive a connecting element
- 41: guiding rail of the back wall to receive a connecting element
- 50: means of the front wall to receive a connecting element
- 51: guiding rail of the front wall to receive a connecting element
- 60, 60': means of the bottom to receive a connecting element
- 61, 61': guiding rail of the bottom to receive a connecting element
- 70: means of the back wall to receive a cover
- 71: guiding rail of the back wall to receive a cover
- 80: means of the front wall to receive a cover
- 81: guiding rail of the front wall to receive a cover
- 40, 50, 60, 70, 80, 90: receiving means
- 90, 91, 92, 93: connecting element

- 150, 151, 152: openings of the bottom
- 160, 161, 162: openings of the cover

- 200: purification module

- 300: fastening element
- 310: fastening means
- 320: plate
- 330, 331, 332, 333: opening of the upper part of the back wall
- 340, 341, 342, 343: openings of the plate
- 350: jagged tab

- d: height difference between the back wall and the front wall

- 400: filtration device
- 410: façade water collecting means
- 411: plastic foil
- 412: foam round profile

- 420: suction device
- 421: sucker

- 500: external surface of a building such as e.g., an external wall or a façade of a building
- 510: space
- 520: sealing strip

- 2000: system comprising at least 2 devices (1000, 1001)
- 3000: system comprising at least 2 receptive modules (100, 101)

## Claims

1. A device (1000) for purifying water flowing down the external surface of a building, whereby the device (1000) comprises a receptive module (100), a purification module (200) and at least one fastening element (300),
- whereby the receptive module (100) comprises a back wall (11), a front wall (12) and a bottom (15) to provide an internal space (120),
- whereby the receptive module (100) is mountable at the external surface of a building by means of the at least one fastening element (300) such that the water flowing down the external surface of the building is directed towards the internal space (120),
- whereby the receptive module (100) is configured to receive the purification module (200), and
- whereby the purification module (200) is configured to purify the water.

2. The device (1000) according to claim 1, whereby the purification module (200) for purifying the water flowing down the external surface of the building comprises activated carbon and/or any other substance which is able to adsorb environmentally harmful particles contained in said water.

3. The device (1000) according to claim 1 and/or claim 2, whereby the back wall (11), the front wall (12) and the bottom (15) of the receptive module (100) are formed in one piece.

4. The device (1000) according to any one or more of the preceding claims, whereby the device (1000) comprises a releasable cover (16) to cover the receptive module (100).

5. The device (1000) according to any one or more of the preceding claims, whereby the bottom (15) and/or the cover (16) are at least partially water-permeable, preferably whereby the bottom (15) and/or the cover (16) comprise a plurality of openings.

6. The device (1000) according to any one or more of the preceding claims, whereby the device (1000) comprises at least one side cover (13, 14) detachably attached to the receptive module (100).

7. The device (1000) according to any one or more of the preceding claims, whereby the receptive module (100) comprises at least one drip point.

8. The device (1000) according to any one or more of the preceding claims, whereby the fastening element (300) is configured as a jagged tab (350) which can be fastened at the external surface of the building by means of an adhesive.

9. The device (1000) according to any one or more of the preceding claims, whereby the receptive module (100) is connectable to another receptive module (101), preferably by means of a connecting element (90).

10. The device (1000) according to any one or more of the claims 1 or 3 to 9, whereby the purification module (200) encompasses a water collecting means (410), a filtration device (400) and optionally a suction device (420).

11. A receptive module (100) configured to receive a purification module to purify water flowing down the external surface of a building and configured to be mounted to the external surface of the building, whereby the receptive module (100) comprises a back wall (11), a front wall (12) and a bottom (15) to provide an internal space (120) for the water, preferably whereby the receptive module (100) further comprises
- a plurality of openings (150, 151, 152) in the bottom (15), and/or
- at least one drip point (20) at the bottom (15), and/or
- means (40, 50, 60) at the back wall (11) and/or at the front wall (12) and/or at the bottom (15), whereby these means (40, 50, 60) are configured to receive a connecting element (90) and/or a side cover (13, 14) and/or a cover (16).

12. A system (2000, 3000) comprising at least two devices (1000, 1001) according to any one and more of claims 1 to 10 or at least two receptive modules (100, 101) according to claim 11, whereby these devices (1000, 1001) and receptive modules (100, 101), respectively, are connected by connecting elements (90, 91) to each other.

13. A process for purifying water flowing down the surface of a building in a device (1000) according to any one or more of claims 1 to 9 or in a system (2000) comprising at least two devices (1000, 1001) according to any one or more of claims 1 to 9 comprising the following steps:
a) directing the water in the internal space (120) of the receptive module (100) or the receptive modules (100, 101),
b) flowing of the water to be purified through the purification module (200) or the purification modules (200, 201) to obtain purified water,
c) leaving of the purified water obtained in step b) of the receptive module (100) or the receptive modules (100, 101).

14. A process for purifying water flowing down the surface of a building in a device (1000) according to claim 10 or in a system (2000) comprising at least two devices (1000, 1001) according to claim 10 comprising the following steps:
i) inserting water collecting means (410, 410') into the internal space (120) of the receptive module (100) or the receptive modules (100, 101) to prevent the water of leaving the receptive module (100) or the receptive modules (100, 101),
ii) directing the water to be purified in the internal space (120) of the receptive module (100) or the receptive modules (100, 101) to collect it there,
iii) transferring the water collected in step ii) into a filtration device (400), whereby the filtration device (400) comprises a suction unit (8), a filter (5) and a layer of an absorbing material (6),
iii1) optionally passing the water through a cyclone separator (9),
iii2) optionally reacting the water with a flocculating agent (7),
iv) sucking the water with the suction unit (8) through the filter (5) and the layer of an absorbing material (6), whereby purified water is obtained.

15. The process for purifying water according to claim 14, whereby the transfer of the water in step iii) is carried out with a suction device (420).
